# FASCICULE DE BREVET EUROPEEN

(11) **EP 3 077 678 B1**
(45) Date de publication et mention de la délivrance du brevet: **02.09.2020**
(21) Numéro de dépôt: 14808577.2
(22) Date de dépôt: 02.12.2014
(51) Int. Cl.: F04D 17/16, F04D 29/28, F04D 29/42

(54) **PULSEUR D'ASPIRATION DESTINÉ À UN DISPOSITIF DE CHAUFFAGE, VENTILATION ET/OU CLIMATISATION D'UN VEHICULE AUTOMOBILE**
SAUGIMPULSGEBER FÜR HEIZUNGS-, KLIMA- UND LÜFTUNGSTECHNISCHE VORRICHTUNG EINES KRAFTFAHRZEUGS
SUCTION PULSER INTENDED FOR A HEATING, VENTILATION AND/OR AIR-CONDITIONING DEVICE OF A MOTOR VEHICLE

(30) Priorité: 04.12.2013 FR 1362058
(43) Date de publication de la demande: 12.10.2016
(73) Titulaire: Valeo Systemes Thermiques, 78320 Le Mesnil Saint Denis (FR)
(72) Inventeur: VINCENT, Philippe, 85800 Givrand (FR)
(74) Mandataire: Tran, Chi-Hai
(86) Numéro de dépôt international: PCT/EP2014/076177
(87) Numéro de publication internationale: WO 2015/082436

(56) Documents cités:
- EP-A2- 1 980 432
- JP-A- H0 924 722
- US-A1- 2007 116 559
- US-A1- 2012 207 593

## Description

La présente invention concerne un pulseur d'aspiration destiné à un dispositif de chauffage, ventilation et/ou climatisation d'un véhicule automobile.

La demande de brevet FR 2 788 086, au nom de la Demanderesse, divulgue un pulseur d'aspiration comprenant une turbine cylindrique apte à être entraînée en rotation autour de son axe, des moyens de séparation aptes à délimiter un premier canal de circulation d'air permettant l'écoulement d'un premier flux d'air destiné à traverser une première partie axiale de la turbine et un second canal de circulation d'air permettant l'écoulement d'un second flux d'air destiné à traverser une seconde partie axiale de la turbine.

Les moyens de séparation comportent un organe tubulaire monté au niveau d'une première extrémité de ladite turbine et délimitant un espace interne formant une partie du premier canal de circulation d'air, le second canal de circulation d'air s'étendant à l'extérieur de l'organe tubulaire.

Le pulseur d'aspiration comporte en outre des moyens d'arrivée d'air comprenant un boîtier recouvrant la première extrémité de la turbine et l'organe tubulaire, lesdits moyens d'arrivée d'air étant aptes à diriger un premier flux d'air dans le premier canal de circulation d'air, et à diriger un second flux d'air dans le second canal de circulation d'air.

Un tel pulseur est dénommé « mono-aspiration », car l'air pénètre dans le pulseur d'un seul côté de la turbine, à savoir du côté où est situé le boîtier et l'organe tubulaire de séparation.

Le pulseur précité permet de séparer deux flux d'air, à savoir un flux d'air de recyclage et un flux d'air provenant de l'extérieur du véhicule, comme le divulgue également le document US2012/0207593.

De manière générale, le fait de recycler de l'air, c'est-à-dire de prélever de l'air dans l'habitacle du véhicule, puis de le conditionner (c'est-à-dire de le chauffer ou de le refroidir) avant de le renvoyer vers l'habitacle, permet d'améliorer le confort de l'utilisateur. En effet, l'air prélevé dans l'habitacle étant déjà à une température proche de la température de consigne à atteindre, cela permet d'arriver rapidement à la température souhaitée par l'utilisateur. Cependant, l'air recyclé est plus chargé en humidité que l'air provenant de l'extérieur du véhicule. Aussi, si de l'air recyclé est envoyé dans l'habitacle à proximité du pare-brise (bouches d'aération situées en avant du conducteur ou du passager avant, par exemple) ou directement sur le pare-brise, l'humidité comprise dans l'air peut se condenser sur le pare-brise et créer de la buée. Un choix peut alors consister à conditionner de l'air externe afin de l'envoyer dans l'habitacle à proximité du pare-brise ou directement sur celui-ci, et à conditionner de l'air de recyclage afin de l'envoyer dans l'habitacle à distance du pare-brise, au niveau des autres bouches d'aération.

Afin d'améliorer la qualité de l'air envoyé vers l'habitacle, il est nécessaire de filtrer les particules présentent dans l'air. La solution la plus facile à mettre en œuvre consiste à placer un ou plusieurs filtres en aval du pulseur d'aspiration. Dans ce cas toutefois, le démontage et le remplacement du filtre sont peu aisés.

Il existe donc un besoin de pouvoir placer le filtre dans une zone qui soit facilement accessible, sans toutefois augmenter sensiblement l'encombrement du dispositif de chauffage, ventilation et/ou climatisation d'un véhicule automobile.

L'invention a notamment pour but d'apporter une solution simple, efficace et économique à ce problème.

A cet effet, elle propose un pulseur d'aspiration destiné à un dispositif de chauffage, ventilation et/ou climatisation d'un véhicule automobile, le pulseur comprenant une turbine cylindrique ou conique apte à être entraînée en rotation autour de l'axe de ladite turbine, des moyens de séparation aptes à délimiter un premier canal de circulation d'air permettant l'écoulement d'un premier flux d'air destiné à traverser une première partie axiale de la turbine et un second canal de circulation d'air permettant l'écoulement d'un second flux d'air destiné à traverser une seconde partie axiale de la turbine, lesdits moyens de séparation comportant un organe tubulaire monté à l'endroit d'une première extrémité de ladite turbine et délimitant un espace interne formant au moins une partie du premier canal de circulation d'air, le second canal de circulation d'air s'étendant à l'extérieur de l'organe tubulaire, des moyens d'arrivée d'air comprenant un boîtier recouvrant la première extrémité de la turbine et l'organe tubulaire, lesdits moyens d'arrivée d'air étant aptes à diriger un premier flux d'air dans le premier canal de circulation d'air, et à diriger un second flux d'air dans le second canal de circulation d'air, caractérisé en ce que ledit boîtier comporte un filtre destiné à être traversé par le premier et le second flux d'air.

Le fait de placer le filtre dans le boîtier permet de placer le filtre en amont de la turbine, sans nécessiter d'augmenter sensiblement l'encombrement du pulseur d'aspiration. Ce dernier est en outre généralement placé dans un endroit facilement accessible du véhicule, ce qui permet de pouvoir démonter et remplacer aisément le filtre, par exemple depuis la boîte à gants du véhicule.

On note que l'organe tubulaire n'est pas nécessairement cylindrique mais peut présenter des formes complexes comportant notamment au moins une zone rectangulaire, cylindrique et/ou évasée.

Selon une caractéristique de l'invention, le boîtier comprend deux zones latérales comportant respectivement un premier orifice équipé d'un premier moyen d'arrêt et un second orifice équipé d'un second moyen d'arrêt, lesdits moyens d'arrêts étant mobiles entre une position ouverte permettant le passage d'un flux d'air au travers de l'orifice correspondant et une position fermée interdisant un tel passage de flux d'air, le boîtier comprenant en outre une zone médiane comportant un troisième et un quatrième orifices munis d'au moins une vanne permettant de commander l'ouverture et/ou la fermeture desdits troisième et quatrième orifices de façon à respectivement autoriser ou interdire le passage de flux d'air au travers desdits troisième et quatrième orifices, le premier orifice et le second orifice étant situés en regard du filtre et du second canal de circulation d'air, s'étendant à l'extérieur de l'organe tubulaire, le troisième orifice et le quatrième orifice étant situés en regard du filtre et du premier canal de circulation d'air, s'étendant à l'intérieur de l'organe tubulaire.

De cette manière, en fonction des positions des moyens d'arrêts et de la vanne, il est possible de diriger les flux correspondants vers le premier canal de circulation d'air et/ou vers le second canal de circulation d'air.

Avantageusement, la vanne des troisième et quatrième orifices est mobile entre une première position dans laquelle elle ouvre le troisième orifice et ferme le quatrième orifice, et une seconde position dans laquelle elle ferme le troisième orifice et ouvre le quatrième orifice.

De préférence, la turbine délimite un espace interne dans laquelle est logée une première extrémité de l'organe tubulaire, ledit organe tubulaire comportant des surfaces interne et externe s'évasant en direction de la première extrémité de l'organe tubulaire, les tangentes auxdites surfaces interne et externe, au niveau de la première extrémité de l'organe tubulaire, étant dirigées dans un plan radial situé en regard de la délimitation entre les première et seconde parties axiales de la turbine.

De cette manière, les premier et second flux d'air sont dirigés respectivement vers les première et seconde parties axiales de la turbine par l'organe tubulaire.

Dans ce cas, le pulseur d'aspiration peut comporter un déflecteur logé dans l'espace interne de la turbine et délimitant, avec la partie évasée de la surface interne de l'organe tubulaire, une partie du premier canal de circulation d'air.

Avantageusement, le bord radialement externe du déflecteur s'étend dans un plan sensiblement radial, en regard d'une seconde extrémité de la turbine.

En outre, le boîtier peut délimiter intérieurement une ouverture de passage d'air comportant une première dimension selon un premier plan axial et une seconde dimension selon un second plan axial, transversal au premier plan, la seconde extrémité de l'organe tubulaire s'étendant sur toute la première dimension de ladite ouverture dans le premier plan axial et sur une partie seulement de la seconde dimension de ladite ouverture dans le second plan axial.

Ainsi, le second flux d'air peut s'écouler entre la paroi interne du boîtier et la surface externe de l'organe tubulaire, sur une partie de l'ouverture du boîtier.

Selon une autre caractéristique de l'invention, le boîtier délimite intérieurement une ouverture de passage d'air, destinée à être traversée par le ou les flux d'air, le filtre s'étendant sur toute la section de ladite ouverture de passage d'air.

L'invention concerne également un dispositif de chauffage, ventilation et/ou climatisation d'un véhicule automobile, comportant au moins un canal d'arrivée d'air externe et au moins un canal d'arrivée d'air de recyclage, caractérisé en ce que qu'il comporte un pulseur d'aspiration du type précité, caractérisé en ce que le premier orifice et le troisième orifice sont en communication avec le canal d'arrivée d'air de recyclage, le deuxième orifice et le quatrième orifice étant en communication avec le canal d'arrivée d'air externe.

Le dispositif peut comporter un premier canal de sortie destiné à alimenter au moins une première zone de l'habitacle du véhicule et un second canal de sortie destiné à alimenter au moins une seconde zone de l'habitacle du véhicule, le premier canal de sortie comportant une entrée située en regard de la première partie axiale de la turbine, le second canal de sortie comportant une entrée située en regard de la seconde partie axiale de la turbine.

Les deux canaux de sortie distincts peuvent par exemple permettre de séparer un flux d'air issu d'air de recyclage et un autre flux d'air issu de l'extérieur du véhicule. Comme indiqué précédemment, l'air prélevé à l'extérieur du véhicule est de préférence rejeté dans l'habitacle du véhicule, après chauffage ou refroidissement, à proximité du pare-brise ou directement sur celui-ci. A l'inverse, l'air recyclé est de préférence rejeté dans l'habitacle du véhicule, après chauffage ou refroidissement, à distance du pare-brise.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique et en coupe axiale d'un pulseur d'aspiration de l'art antérieur,
- la figure 2 est une vue schématique et en coupe axiale d'un pulseur d'aspiration de l'invention, selon le plan P1 de la figure 3, et illustre un premier mode de fonctionnement,
- la figure 3 est une vue schématique et en coupe axiale du pulseur d'aspiration de la figure 2, selon le plan P2 de la figure 1, et illustre le premier mode de fonctionnement,
- les figures 4 et 5 sont des vues correspondant respectivement aux figures 2 et 3, illustrant un deuxième mode de fonctionnement de l'invention,
- les figures 6 et 7 sont des vues correspondant respectivement aux figures 2 et 3, illustrant un troisième mode de fonctionnement de l'invention.

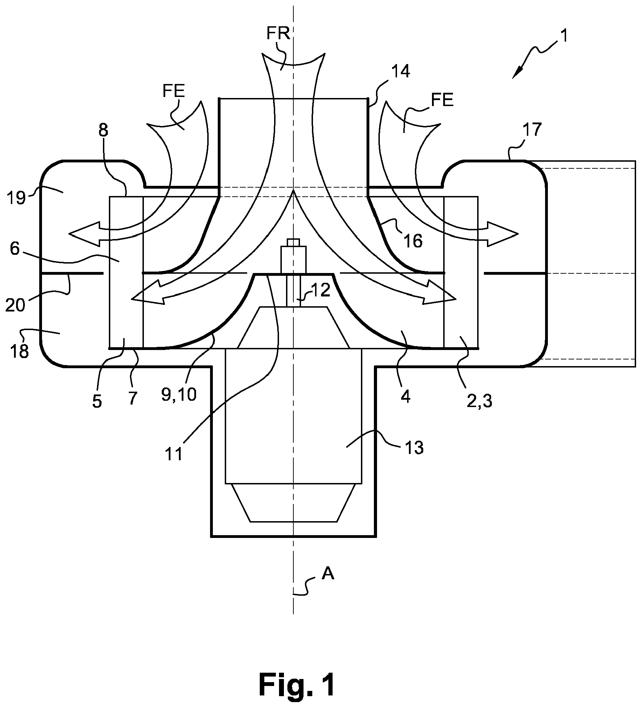

La figure 1 représente un pulseur d'aspiration 1 connu de la demande de brevet FR 2 779 503. Celui comporte une turbine 2 de forme générale cylindrique, d'axe A. La turbine comporte des pales 3 à sa périphérie radialement externe et délimite intérieurement un espace cylindrique 4. La turbine 2 comporte une première partie axiale 5 s'étendant depuis l'extrémité 7 de la turbine 2 jusqu'à une zone axialement médiane, une seconde partie axiale 6 s'étendant depuis ladite zone médiane jusqu'à une autre extrémité 8 de la turbine 2. Un déflecteur 9 est fixé à la turbine 2. Celui-ci se présente sous la forme d'une pièce de révolution d'axe A, dont la génératrice comporte une zone radialement externe arrondie 10 dont la concavité est tournée vers le haut, c'est-à-dire en direction de l'extrémité 8 de la turbine 2, le déflecteur 9 comportant en outre une zone centrale 11 en forme de disque perpendiculaire à l'axe A, au niveau de laquelle est fixé un arbre rotatif d'entraînement 12 d'un moteur électrique 13.

La périphérie radialement externe du déflecteur 9 a une tangente s'étendant dans un plan radial et est fixée à l'extrémité basse 7 de la turbine 2.

Les termes haut et bas sont définis ici par référence aux figures et n'ont pas de caractère limitatif.

Un organe tubulaire 14 de séparation de flux d'air est monté pour partie dans l'espace interne 4 de la turbine 2, depuis l'extrémité haute 8 de la turbine 2.

Cet organe tubulaire 14 comporte une partie haute cylindrique 15 et une partie basse 16 s'évasant vers le bas. La partie basse a une forme de révolution d'axe A, dont la génératrice est arrondie et a sa concavité tournée vers le haut. La surface interne (tournée vers le bas) de la partie évasée 16 est sensiblement parallèle à la surface externe (tournée vers le haut) du déflecteur 9.

Un boîtier 17 entoure la turbine 2 et le moteur 13, ledit boîtier 17 comportant deux canaux 18, 19 s'étendant respectivement en regard des parties 5, 6 de la turbine 2. Le boîtier 17 comporte en particulier une paroi de séparation annulaire 20 permettant de délimiter les deux canaux 18, 19. L'organe tubulaire 14 est fixe par rapport au boîtier 17.

En fonctionnement, le moteur 13 entraîne en rotation le déflecteur 9 et la turbine 2.

Un premier flux d'air F_{R}, tel par exemple que de l'air prélevé dans l'habitacle (également appelé air de recyclage ou air recyclé) et ayant subi une étape de conditionnement (chauffage, climatisation), est envoyé à l'intérieur de l'organe tubulaire 14. Ce flux d'air F_{R} est dirigé par les surfaces correspondantes du déflecteur 9 et de l'organe tubulaire 14 en regard de la partie axiale basse 5 de la turbine 2. Après avoir traversé les pales 3 de la turbine 2, ce flux d'air F_{R} pénètre dans le canal 18, ce dernier débouchant dans l'habitacle du véhicule, par exemple à distance du pare-brise.

Un second flux d'air F_{E}, tel par exemple que de l'air prélevé à l'extérieur du véhicule et ayant subi une étape de conditionnement (chauffage, climatisation), est envoyé à l'extérieur de l'organe tubulaire 14. Ce flux d'air F_{E} est dirigé par la surface correspondante de l'organe tubulaire 14 en regard de la partie axiale haute 6 de la turbine 2. Après avoir traversé les pales 3 de la turbine 2, ce flux d'air F_{E} pénètre dans le canal 19, ce dernier débouchant dans l'habitacle du véhicule, par exemple à proximité ou directement en regard du pare-brise.

Un pulseur unique permet ainsi de générer deux flux d'air distincts.

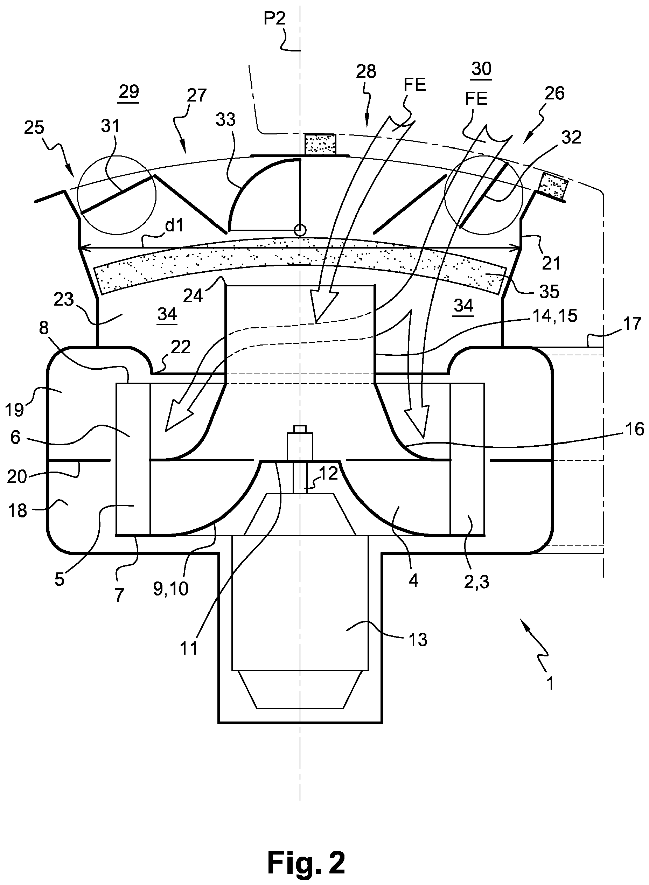

L'invention illustrée aux figures 2 à 7 s'attache à définir la manière dont l'air est amené dans l'organe mobile 14 ou à l'extérieur de celui-ci, et prévoit de filtrer l'air.

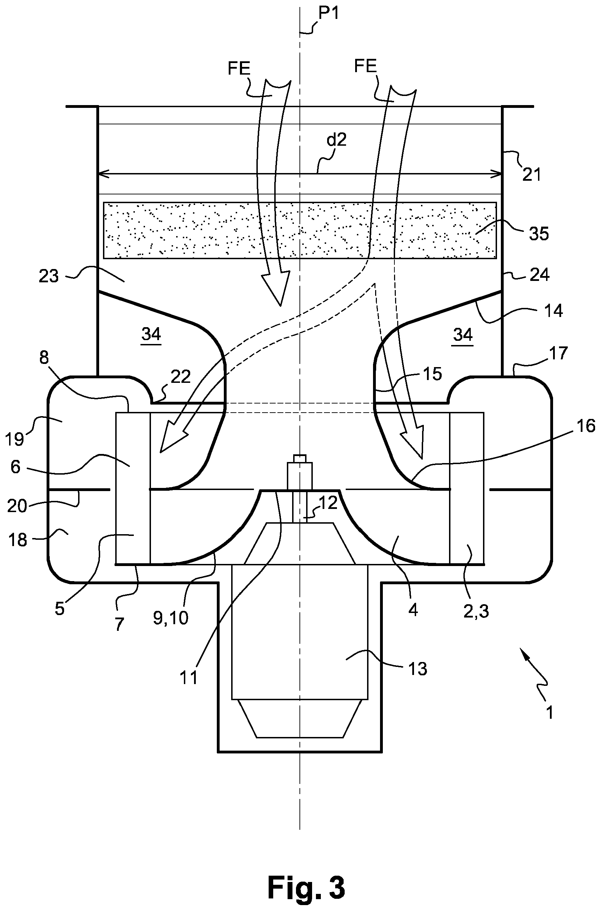

Les figures 2 et 3 illustrent un pulseur d'aspiration 1 selon une forme de réalisation de l'invention. Celui-ci présente sensiblement les mêmes caractéristiques que le pulseur exposé précédemment, à l'exception des caractéristiques détaillées ci-après.

Dans cette forme de réalisation de l'invention, le pulseur d'aspiration 1 comporte un boîtier additionnel 21, fixé au-dessus de l'ouverture supérieure 22 du boîtier 17. Le boîtier additionnel 21 délimite un espace interne 23 ouvert vers le bas de manière à permettre l'entrée d'air dans la turbine 2 et/ou dans l'organe tubulaire 14.

L'espace interne 23 du boîtier additionnel 21 délimite ainsi une ouverture de passage d'air comportant une première dimension d1 selon un premier plan axial P1 et une seconde dimension d2 selon un second plan axial P2, le second plan P2 étant perpendiculaire au premier plan P1. Dans le cas où l'ouverture de passage d'air est circulaire ou carrée, les deux dimensions d1, d2 sont identiques.

L'extrémité supérieure 24 de l'organe tubulaire 14, de section sensiblement rectangulaire, s'étend sur toute la première dimension d1 dans le premier plan axial P1 et sur une partie seulement de la seconde dimension d2 dans le second plan axial P2.

La partie haute 24 de l'organe tubulaire est raccordée à la partie cylindrique 15 par une zone de raccordement progressive, la partie cylindrique 15 étant elle-même prolongée vers le bas par la partie évasée 16.

Ainsi, dans le plan P1, de l'air peut s'écouler dans les passages latéraux 34 situés entre la surface externe de l'organe tubulaire 14 et la paroi interne du boîtier 23 ou le bord de l'ouverture 22 du boîtier 17 (figure 2).

La partie supérieure du boîtier additionnel 21 comporte quatre orifices de passage d'air, à savoir deux orifices référencés 25 et 27, situés en regard du débouché d'un conduit 29 d'arrivée d'air de recyclage, ainsi que deux orifices référencés 26 et 28, situés en regard du débouché d'un conduit 30 d'arrivée d'air extérieur au véhicule.

Les orifices 25, 26 sont fermés chacun par une vanne d'arrêt 31, 32 ou par un volet mobile entre des positions d'ouverture ou de fermeture de l'orifice correspondant. En outre, une vanne mobile 33 permet de commander l'ouverture ou la fermeture des orifices 27 et 28. Plus particulièrement, la vanne 33 est mobile entre une première position dans laquelle elle ferme l'orifice 27 et ouvre l'orifice 28, et une seconde position dans laquelle elle ferme l'orifice 28 et ouvre l'orifice 27.

Les orifices 25 et 26 sont situés en regard des passages latéraux 34 et les orifices 27 et 28 sont situés en regard de l'ouverture supérieure 24 de l'organe tubulaire 14.

Un filtre 35 est monté dans le boîtier additionnel 21 et occupe toute la surface de l'ouverture de passage de l'air compte tenu de sa position dans le pulseur d'aspiration 1. Un tel filtre 35 peut être démonté facilement, en ouvrant ou en retirant le boîtier additionnel 21 accessible par exemple depuis la boîte à gants du véhicule.

Le filtre 35 est monté axialement entre les orifices 25 à 28 et l'extrémité supérieure 24 de l'organe tubulaire 14, située en partie inférieure du boîtier additionnel 21.

Les figures 2 et 3 illustrent un premier mode de fonctionnement dans lequel les orifices 26 et 28 sont ouverts et dans lequel les orifices 25 et 27 sont fermés. Dans ce cas, de l'air extérieur F_{E} pénètre par l'orifice 28, traverse le filtre 35 et l'organe tubulaire 14, la partie basse 5 de la turbine 2, et pénètre dans le canal 18. Parallèlement, de l'air extérieur F_{E} pénètre également par l'orifice 26, traverse le filtre 35, la partie haute 6 de la turbine 2 et pénètre dans le canal 19.

Un tel mode de fonctionnement peut par exemple être utilisé en cas de chauffage de l'air extérieur F_{E} (par exemple en hiver ou à la mi-saison).

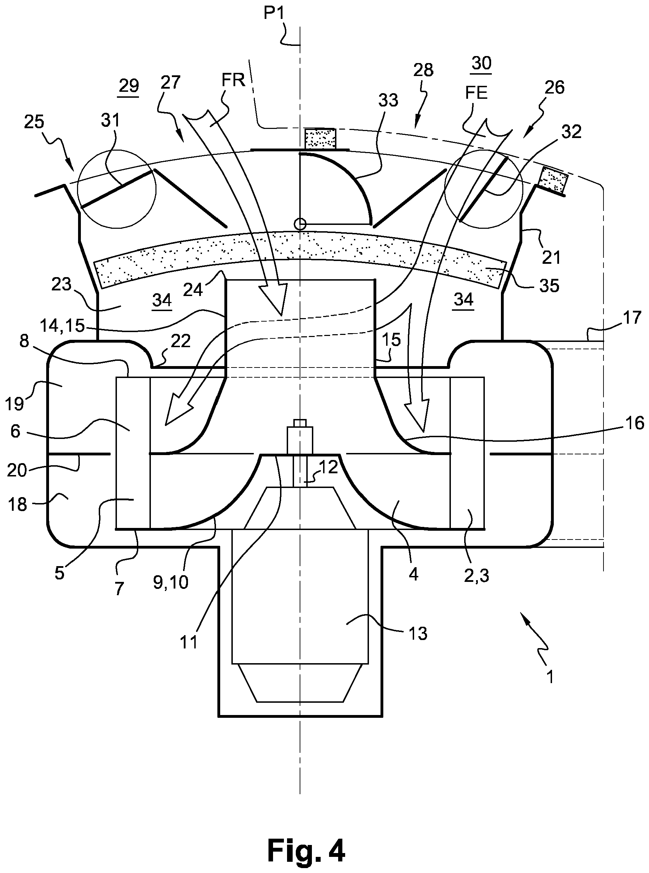

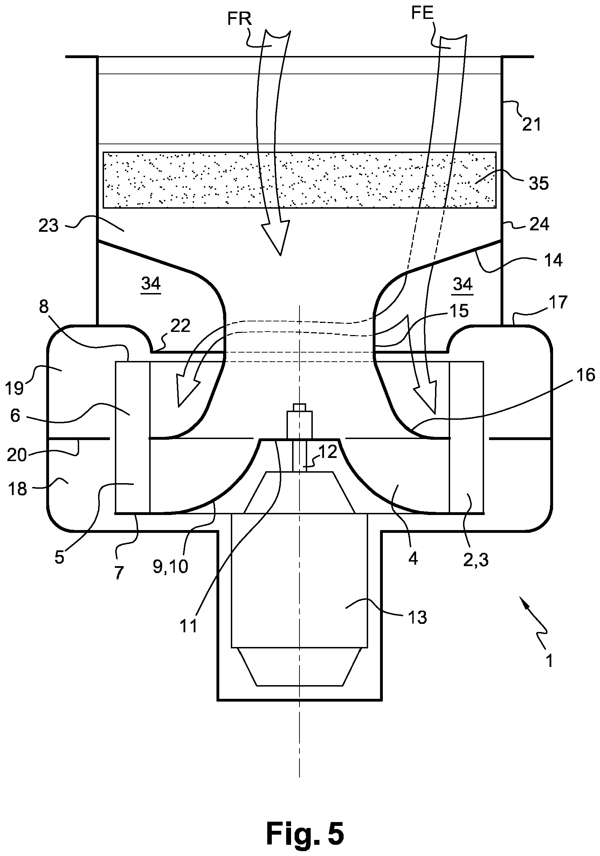

Les figures 4 et 5 illustrent un deuxième mode de fonctionnement dans lequel les orifices 26 et 27 sont ouverts et dans lequel les orifices 25 et 28 sont fermés. Dans ce cas, de l'air de recyclage F_{R} pénètre par l'orifice 27, traverse le filtre 35 et l'organe tubulaire 14, la partie basse 5 de la turbine 2, et pénètre dans le canal 18. Parallèlement, de l'air extérieur F_{E} pénètre par l'orifice 26, traverse le filtre 35, la partie haute 6 de la turbine 2 et pénètre dans le canal 19.

Un tel mode de fonctionnement peut par exemple être utilisé en cas de chauffage de l'air (par exemple en hiver ou à la mi-saison) et permet de réduire le temps nécessaire pour atteindre une température de consigne, la température de l'air prélevé dans l'habitacle étant supérieure à la température de l'air externe.

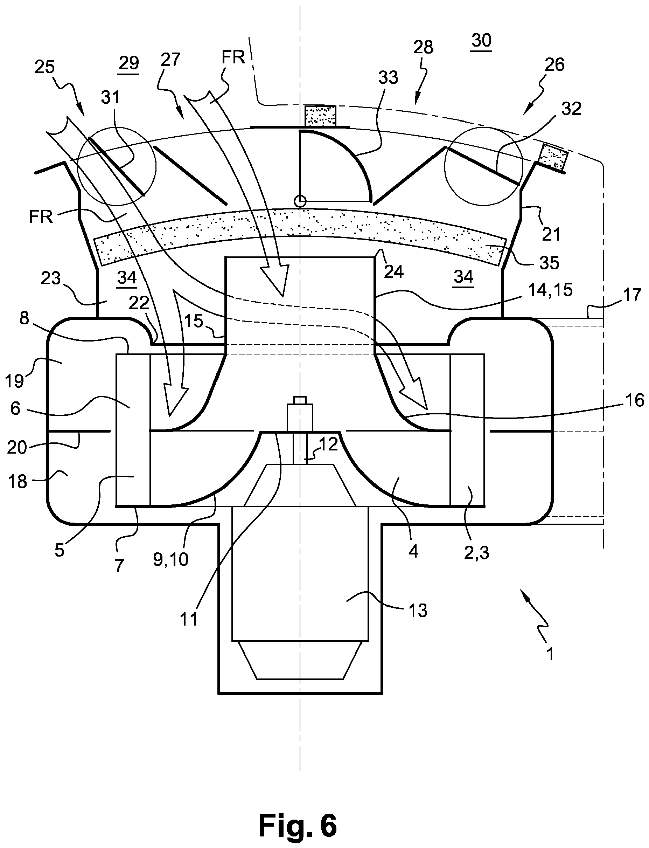

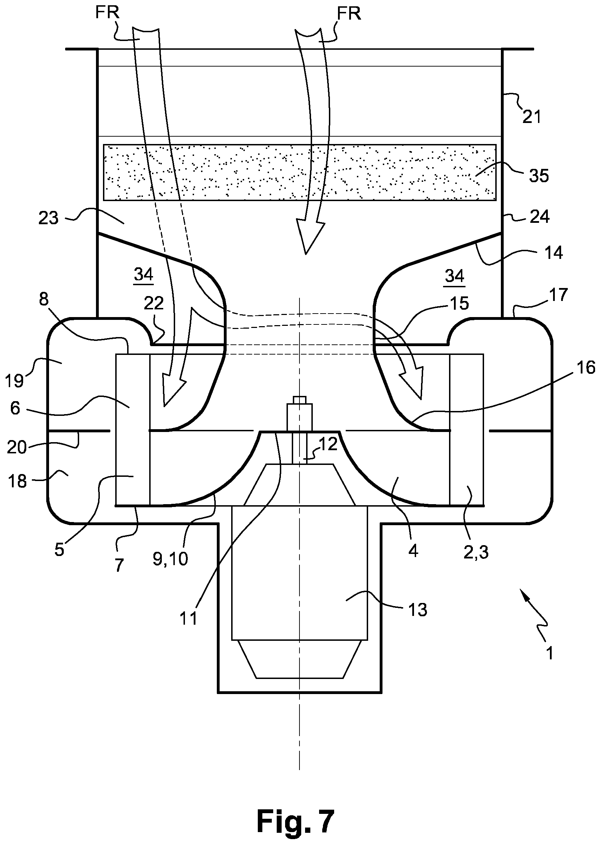

Les figures 6 et 7 illustrent un troisième mode de fonctionnement dans lequel les orifices 25 et 27 sont ouverts et dans lequel les orifices 26 et 28 sont fermés. Dans ce cas, de l'air de recyclage pénètre par l'orifice 27, traverse le filtre 35 et l'organe tubulaire 14, la partie basse 5 de la turbine 2, et pénètre dans le canal 18. Parallèlement, de l'air de recyclage F_{R} pénètre par l'orifice 25, traverse le filtre 35, la partie haute 6 de la turbine 2 et pénètre dans le canal 19.

Un tel mode de fonctionnement peut par exemple être utilisé en cas de climatisation de l'air (par exemple en été). En effet, dans un tel cas, l'humidité présente dans l'air de l'habitacle a tendance à se condenser lors de son passage dans l'évaporateur permettant le refroidissement de l'air. Cet air de recyclage n'est donc pas ou peu chargé en humidité et peut être envoyé dans l'habitacle à proximité du pare-brise.

## Revendications

1. Pulseur d'aspiration (1) destiné à un dispositif de chauffage, ventilation et/ou climatisation d'un véhicule automobile, le pulseur comprenant une turbine (2) cylindrique ou conique apte à être entraînée en rotation autour de l'axe (A) de ladite turbine (2), des moyens de séparation (14) aptes à délimiter un premier canal de circulation d'air permettant l'écoulement d'un premier flux d'air destiné à traverser une première partie axiale (5) de la turbine (2) et un second canal de circulation d'air permettant l'écoulement d'un second flux d'air destiné à traverser une seconde partie axiale (6) de la turbine (2), lesdits moyens de séparation comportant un organe tubulaire (14) monté à l'endroit d'une première extrémité (8) de ladite turbine (2) et délimitant un espace interne formant au moins une partie du premier canal de circulation d'air, le second canal de circulation d'air s'étendant à l'extérieur de l'organe tubulaire (14), des moyens d'arrivée d'air comprenant un boîtier (21) recouvrant la première extrémité (8) de la turbine (2) et l'organe tubulaire (14), lesdits moyens d'arrivée d'air étant aptes à diriger un premier flux d'air dans le premier canal de circulation d'air, et à diriger un second flux d'air dans le second canal de circulation d'air, ledit boîtier (21) comportant un filtre (35) destiné à être traversé par le premier et le second flux d'air,
**caractérisé en ce que** le boîtier (21) comprend deux zones latérales comportant respectivement un premier orifice (25) équipé d'un premier moyen d'arrêt (31) et d'un second orifice (26) équipé d'un second moyen d'arrêt (32), lesdits moyens d'arrêts (31, 32) étant mobiles entre une position ouverte permettant le passage d'un flux d'air au travers de l'orifice correspondant (25, 26) et une position fermée interdisant un tel passage de flux d'air, le boîtier (21) comprenant en outre une zone médiane comportant un troisième et un quatrième orifices (27, 28) munis d'au moins une vanne (33) permettant de commander l'ouverture et/ou la fermeture desdits troisième et quatrième orifices (27, 28) de façon à respectivement autoriser ou interdire le passage de flux d'air au travers desdits troisième et quatrième orifices (27, 28), le premier orifice (25) et le second orifice (26) étant situés en regard du filtre (35) et du second canal de circulation d'air, s'étendant à l'extérieur de l'organe tubulaire (14), le troisième orifice (27) et le quatrième orifice (28) étant situés en regard du filtre (35) et du premier canal de circulation d'air, s'étendant à l'intérieur de l'organe tubulaire (14).

2. Pulseur d'aspiration (1) selon la revendication 1, **caractérisé en ce que** la vanne (33) des troisième et quatrième orifices (27, 28) est mobile entre une première position dans laquelle elle ouvre le troisième orifice (27) et ferme le quatrième orifice (28), et une seconde position dans laquelle elle ferme le troisième orifice (27) et ouvre le quatrième orifice (28).

3. Pulseur d'aspiration (1) selon l'une des revendications 1 ou 2, **caractérisé en ce que** la turbine (2) délimite un espace interne (4) dans laquelle est logée une première extrémité de l'organe tubulaire (14), ledit organe tubulaire (14) comportant des surfaces interne et externe s'évasant en direction de la première extrémité de l'organe tubulaire (14), les tangentes auxdites surfaces interne et externe, au niveau de la première extrémité de l'organe tubulaire (14), étant dirigées dans un plan radial situé en regard de la délimitation entre les première et seconde parties axiales (5, 6) de la turbine (2).

4. Pulseur d'aspiration (1) selon la revendication 3, **caractérisé en ce qu'**il comporte un déflecteur (9) logé dans l'espace interne (4) de la turbine (2) et délimitant, avec la partie évasée (16) de la surface interne de l'organe tubulaire (14), une partie du premier canal de circulation d'air.

5. Pulseur d'aspiration (1) selon la revendication 4, **caractérisé en ce que** le bord radialement externe du déflecteur (9) s'étend dans un plan sensiblement radial, en regard d'une seconde extrémité (7) de la turbine (2).

6. Pulseur d'aspiration (1) selon l'une des revendications 1 à 5, **caractérisé en ce que** le boîtier (21) délimite intérieurement une ouverture de passage d'air comportant une première dimension (d1) selon un premier plan axial (P1) et une seconde dimension (d2) selon un second plan axial (P2) transversal, au premier plan (P1), la seconde extrémité (24) de l'organe tubulaire (14) s'étendant sur toute la première dimension (d1) de ladite ouverture dans le premier plan axial (P1) et sur une partie seulement de la seconde dimension (d2) de ladite ouverture dans le second plan axial (P2).

7. Pulseur d'aspiration (1) selon l'une des revendications 1 à 6, **caractérisé en ce que** le boîtier (21) délimite intérieurement une ouverture de passage d'air, destinée à être traversée par le ou les flux d'air, le filtre (35) s'étendant sur toute la section de ladite ouverture de passage d'air.

8. Dispositif de chauffage, ventilation et/ou climatisation d'un véhicule automobile, comportant au moins un canal d'arrivée d'air externe (30) et au moins un canal d'arrivée d'air de recyclage (29), **caractérisé en ce que** qu'il comporte un pulseur d'aspiration (1) selon l'une des revendications 2 à 8, **caractérisé en ce que** le premier orifice (25) et le troisième orifice (27) sont en communication avec le canal d'arrivée d'air de recyclage (29), le deuxième orifice (26) et le quatrième orifice (28) étant en communication avec le canal d'arrivée d'air externe (30).

9. Dispositif selon la revendication 8, **caractérisé en ce qu'**il comporte un premier canal de sortie (18) destiné à alimenter au moins une première zone de l'habitacle du véhicule et un second canal de sortie (19) destiné à alimenter au moins une seconde zone de l'habitacle du véhicule, le premier canal de sortie (18) comportant une entrée située en regard de la première partie axiale (5) de la turbine (2), le second canal de sortie (19) comportant une entrée située en regard de la seconde partie axiale (6) de la turbine (2).

## Patentansprüche

1. Ansauggebläse (1), das für eine Heizungs-, Belüftungs- und/oder Klimavorrichtung eines Kraftfahrzeugs bestimmt ist, wobei das Gebläse Folgendes beinhaltet: eine zylindrische oder konische Turbine (2), die fähig ist, um die Achse (A) der Turbine (2) rotierend angetrieben zu werden, Trennungsmittel (14), die fähig sind, einen ersten Luftzirkulationskanal, der den Durchfluss eines ersten Luftstroms, der einen ersten axialen Abschnitt (5) der Turbine (2) durchqueren soll, gestattet, und einen zweiten Luftzirkulationskanal, der den Durchfluss eines zweiten Luftstroms, der einen zweiten axialen Abschnitt (6) der Turbine (2) durchqueren soll, gestattet, abzugrenzen, wobei die Trennungsmittel ein rohrförmiges Element (14) umfassen, das an der Stelle eines ersten Endes (8) der Turbine (2) montiert ist und einen Innenraum abgrenzt, der mindestens einen Abschnitt des ersten Luftzirkulationskanals bildet, wobei sich der zweite Luftzirkulationskanal außerhalb des rohrförmigen Elements (14) erstreckt, Luftzuführungsmittel, die ein Gehäuse (21) beinhalten, das das erste Ende (8) der Turbine (2) und das rohrförmige Element (14) abdeckt, wobei die Luftzuführungsmittel fähig sind, einen ersten Luftstrom in den ersten Luftzirkulationskanal zu leiten und einen zweiten Luftstrom in den zweiten Luftzirkulationskanal zu leiten, wobei das Gehäuse (21) einen Filter (35) umfasst, der dazu bestimmt ist, von dem ersten und dem zweiten Luftstrom durchquert zu werden, **dadurch gekennzeichnet, dass** das Gehäuse (21) zwei seitliche Bereiche beinhaltet, die jeweils eine erste Öffnung (25), die mit einem ersten Absperrmittel (31) ausgerüstet ist, und eine zweite Öffnung (26), die mit einem zweiten Absperrmittel (32) ausgerüstet ist, umfassen, wobei die Absperrmittel (31, 32) zwischen einer offenen Position, die den Durchgang eines Luftstroms durch die entsprechende Öffnung (25, 26) gestattet, und einer geschlossene Position, die einen solchen Durchgang eines Luftstroms unterbindet, bewegbar sind, wobei das Gehäuse (21) ferner einen mittleren Bereich beinhaltet, der eine dritte und eine vierte Öffnung (27, 28) umfasst, die mit mindestens einem Schieber (33) versehen sind, der das Steuern des Öffnens und/oder des Schließens der dritten und vierten Öffnung (27, 28) gestattet, um den Durchgang eines Luftstroms durch die dritte und vierte Öffnung (27, 28) zu erlauben bzw. zu unterbinden, wobei sich die erste Öffnung (25) und die zweite Öffnung (26) im Bereich des Filters (35) und des zweiten Luftzirkulationskanals, der sich außerhalb des rohrförmigen Organs (14) erstreckt, befinden, wobei sich die dritte Öffnung (27) und die vierte Öffnung (28) im Bereich des Filters (35) und des ersten Luftzirkulationskanals, der sich innerhalb des rohrförmigen Elements (14) erstreckt, befinden.

2. Ansauggebläse (1) nach Anspruch 1, **dadurch gekennzeichnet, dass** der Schieber (33) der dritten und vierten Öffnung (27, 28) zwischen einer ersten Position, in der er die dritte Öffnung (27) öffnet und die vierte Öffnung (28) schließt, und einer zweiten Position, in der er die dritte Öffnung (27) schließt und die vierte Öffnung (28) öffnet, bewegbar ist.

3. Ansauggebläse (1) nach einem der Ansprüche 1 oder 2, **dadurch gekennzeichnet, dass** die Turbine (2) einen Innenraum (4) abgrenzt, in dem ein erstes Ende des rohrförmigen Elements (14) untergebracht ist, wobei das rohrförmige Element (14) eine Innen- und eine Außenfläche aufweist, die sich in Richtung des ersten Endes des rohrförmigen Elements (14) aufweiten, wobei die Tangenten der Innen- und Außenfläche an dem ersten Ende des rohrförmigen Elements (14) in einer radialen Ebene, die sich im Bereich der Abgrenzung zwischen dem ersten und zweiten axialen Abschnitt (5, 6) der Turbine (2) befindet, angeordnet sind.

4. Ansauggebläse (1) nach Anspruch 3, **dadurch gekennzeichnet, dass** es einen Deflektor (9) umfasst, der in dem Innenraum (4) der Turbine (2) untergebracht ist und mit dem aufgeweiteten Abschnitt (16) der Innenfläche des rohrförmigen Elements (14) einen Abschnitt des ersten Luftzirkulationskanals abgrenzt.

5. Ansauggebläse (1) nach Anspruch 4, **dadurch gekennzeichnet, dass** sich der radial äußere Rand des Deflektors (9) im Bereich eines zweiten Endes (7) der Turbine (2) in einer im Wesentlichen radialen Ebene erstreckt.

6. Ansauggebläse (1) nach einem der Ansprüche 1 bis 5, **dadurch gekennzeichnet, dass** das Gehäuse (21) innen eine Luftdurchgangsöffnung abgrenzt, die ein erstes Maß (d1) gemäß einer ersten axialen Ebene (P1) und ein zweites Maß (d2) gemäß einer zweiten axialen Ebene (P2), die quer zu der ersten Ebene (P1) verläuft, umfasst, wobei sich das zweite Ende (24) des rohrförmigen Elements (14) über das gesamte erste Maß (d1) der Öffnung in der ersten axialen Ebene (P1) und nur über einen Abschnitt des zweiten Maßes (d2) der Öffnung in der zweiten axialen Ebene (P2) erstreckt.

7. Ansauggebläse (1) nach einem der Ansprüche 1 bis 6, **dadurch gekennzeichnet, dass** das Gehäuse (21) innen eine Luftdurchgangsöffnung abgrenzt, die dazu bestimmt ist, von dem oder den Luftströmen durchquert zu werden, wobei sich der Filter (35) über den gesamten Querschnitt der Luftdurchgangsöffnung erstreckt.

8. Heizungs-, Belüftungs- und/oder Klimavorrichtung eines Kraftfahrzeugs, die mindestens einen Kanal für die Zuführung von Außenluft (30) und mindestens einen Kanal für die Zuführung von Umluft (29) umfasst, **dadurch gekennzeichnet, dass** sie ein Ansauggebläse (1) nach einem der Ansprüche 2 bis 8 umfasst, **dadurch gekennzeichnet, dass** die erste Öffnung (25) und die dritte Öffnung (27) mit dem Kanal für die Zuführung von Umluft (29) in Verbindung stehen und die zweite Öffnung (26) und die vierte Öffnung (28) mit dem Kanal für die Zuführung von Außenluft (30) in Verbindung stehen.

9. Vorrichtung nach Anspruch 8, **dadurch gekennzeichnet, dass** sie einen ersten Auslasskanal (18), der dazu bestimmt ist, mindestens einen ersten Bereich des Fahrgastraums des Fahrzeugs zu versorgen, und einen zweiten Auslasskanal (19), der dazu bestimmt ist, mindestens einen zweiten Bereich des Fahrgastraums des Fahrzeugs zu versorgen, umfasst, wobei der erste Auslasskanal (18) einen Eingang umfasst, der sich im Bereich des ersten axialen Abschnitts (5) der Turbine (2) befindet, wobei der zweite Auslasskanal (19) einen Eingang umfasst, der sich im Bereich des zweiten axialen Abschnitts (6) der Turbine (2) befindet.

## Claims

1. Suction pulser (1) intended for a heating, ventilation and/or air-conditioning device of a motor vehicle, the pulser comprising a cylindrical or conical turbine (2) that is able to be driven in rotation about the axis (A) of the said turbine (2), separation means (14) that are suitable for delimiting a first air circulation duct allowing a first flow of air, intended to pass through a first axial part (5) of the turbine (2), to flow, and a second air circulation duct allowing a second flow of air, intended to pass through a second axial part (6) of the turbine (2), to flow, the said separation means comprising a tubular member (14) mounted in line with a first end (8) of the said turbine (2) and delimiting an internal space forming at least one part of the first air circulation duct, the second air circulation duct extending outside the tubular member (14), air inlet means comprising a housing (21) covering the first end (8) of the turbine (2) and the tubular member (14), the said air inlet means being able to direct a first flow of air into the first air circulation duct, and to direct a second flow of air into the second air circulation duct, the said housing (21) comprising a filter (35) that is intended to have the first and second flow of air pass through it, **characterized in that** the housing (21) comprises two lateral zones respectively comprising a first orifice (25) equipped with a first arresting means (31) and a second orifice (26) equipped with a second arresting means (32), the said arresting means (31, 32) being able to move between an open position that allows a flow of air to pass through the corresponding orifice (25, 26) and a closed position that prevents such a passage of the flow of air, the housing (21) further comprising a median zone that comprises a third and a fourth orifice (27, 28) which are provided with at least one valve (33) that serves to control the opening and/or the closing of the said third and fourth orifices (27, 28) so as to respectively allow the flow of air to pass through or prevent the flow of air from passing through the said third and fourth orifices (27, 28), the first orifice (25) and the second orifice (26) being located facing the filter (35) and the second air circulation duct, extending outside the tubular member (14), the third orifice (27) and the fourth orifice (28) being located facing the filter (35) and the first air circulation duct, extending inside the tubular member (14).

2. Suction pulser (1) according to Claim 1, **characterized in that** the valve (33) of the third and the fourth orifice (27, 28) is able to move between a first position in which it opens the third orifice (27) and closes the fourth orifice (28), and a second position in which it closes the third orifice (27) and opens the fourth orifice (28).

3. Suction pulser (1) according to either of Claims 1 and 2, **characterized in that** the turbine (2) delimits an internal space (4) in which a first end of the tubular member (14) is accommodated, the said tubular member (14) comprising internal and external surfaces that widen in the direction of the first end of the tubular member (14), the tangents to the said internal and external surfaces, at the first end of the tubular member (14), being oriented in a radial plane facing the boundary between the first and the second axial part (5, 6) of the turbine (2).

4. Suction pulser (1) according to Claim 3, **characterized in that** it comprises a deflector (9) accommodated in the internal space (4) of the turbine (2) and delimiting, with the widened part (16) of the internal surface of the tubular member (14), a part of the first air circulation duct.

5. Suction pulser (1) according to Claim 4, **characterized in that** the radially outer edge of the deflector (9) extends in an essentially radial plane, facing a second end (7) of the turbine (2).

6. Suction pulser (1) according to one of Claims 1 to 5, **characterized in that** the housing (21) delimits, internally, an air passage opening comprising a first dimension (d1) in a first axial plane (P1) and a second dimension (d2) in a second axial plane (P2) which is transverse to the first plane (P1), the second end (24) of the tubular member (14) extending over the entire first dimension (d1) of the said opening in the first axial plane (P1) and over only part of the second dimension (d2) of the said opening in the second axial plane (P2).

7. Suction pulser (1) according to one of Claims 1 to 6, **characterized in that** the housing (21) delimits, internally, an air passage opening which is intended to have the flow or flows of air passing through it, the filter (35) extending over the entire cross section of the said air passage opening.

8. Heating, ventilation and/or air conditioning device for a motor vehicle, comprising at least one external air inlet duct (30) and at least one recycled air inlet duct (29), **characterized in that** it comprises a suction pulser (1) according to one of Claims 2 to 8, **characterized in that** the first orifice (25) and the third orifice (27) communicate with the recycled air inlet duct (29), the second orifice (26) and the fourth orifice (28) communicating with the external air inlet duct (30).

9. Device according to Claim 8, **characterized in that** it comprises a first outlet duct (18) that is intended to supply at least one first zone of the cabin of the vehicle and a second outlet duct (19) that is intended to supply at least one second zone of the cabin of the vehicle, the first outlet duct (18) comprising an inlet located facing the first axial part (5) of the turbine (2), the second outlet duct (19) comprising an inlet located facing the second axial part (6) of the turbine (2).
